# FASCICULE DE BREVET EUROPEEN

(11) **EP 0 610 353 B1**
(45) Date de publication et mention de la délivrance du brevet: **09.04.1997**
(21) Numéro de dépôt: 92922743.7
(22) Date de dépôt: 07.10.1992
(51) Int. Cl.: G05D 16/20, B60T 8/36

(54) **DISPOSITIF DE REGULATION DE PRESSION POUR CIRCUIT HYDRAULIQUE**
DRUCKREGELEINRICHTUNG FÜR HYDRAULISCHEN SCHALTKREIS
PRESSURE CONTROL DEVICE FOR HYDRAULIC CIRCUITS

(30) Priorité: 31.10.1991 FR 9113481
(43) Date de publication de la demande: 17.08.1994
(73) Titulaire: Bosch Systemes de Freinage, 93700 Drancy (FR)
(72) Inventeur: KERVAGORET, Gilbert, F-95100 Argenteuil (FR)
(74) Mandataire: Bentz, Jean-Paul
(86) Numéro de dépôt international: FR9200928
(87) Numéro de publication internationale: WO9309485

(56) Documents cités:
- EP-A- 0 254 483
- EP-A- 0 357 964
- WO-A-90/05658
- WO-A-91/15388
- US-A- 4 744 389
- MACHINE DESIGN. vol. 63, no. 2, 24 Janvier 1991, CLEVELAND US pages 59 - 62 FABIAN ET AL. 'Expanding the use of COMPACT HYDRAULICS'

## Description

L'invention concerne un dispositif de régulation de pression pour circuit hydraulique. Elle est particulièrement adaptée aux systèmes de freinage de véhicules automobiles à antiblocage des roues au freinage. Les systèmes actuels d'antiblocage mettent en oeuvre, entre une source de fluide sous pression et un récepteur tel qu'un moteur hydraulique de frein, une électrovalve commandée par un calculateur en fonction de signaux représentatifs de la rotation des roues du véhicule pour, de manière générale, détendre la pression du fluide dans le moteur hydraulique lorsque le calculateur détecte l'imminence du blocage d'une roue, puis connecter une deuxième source de fluide sous pression pour augmenter à nouveau la pression, jusqu'à une nouvelle détection d'imminence de blocage, le cycle se renouvelant alors. Des électrovalves du même type sont employées dans des systèmes d'antipatinage pour engendrer une pression dans un moteur de frein d'une roue motrice lorsque le calculateur détecte une tendance au patinage de cette roue motrice, puis détendre cette pression lorsque la tendance au patinage a disparu.

Les électrovalves utilisées sont des électrovalves fonctionnant en tout-ou-rien. Or, les périodes d'antiblocage ou d'antipatinage où des cycles tels que décrits ci-dessus se succèdent, durent un temps très court pendant lequel l'électrovalve change de très nombreuses fois d'états. Cela provoque un bruit désagréable de battement de la partie mobile de l'électrovalve.

Par ailleurs, le système fonctionnant en tout-ou-rien, il apparaît des à-coups de pression dans les freins engendrant des régimes transitoires mal contrôlés.

La présente invention a pour but d'obvier à ces inconvénients en mettant en oeuvre une électrovalve dite proportionnelle assurant dans le circuit utilisateur une pression hydraulique fonction du courant circulant dans la bobine de l'électrovalve dans une plage déterminée de déplacement du noyau magnétique de l'électrovalve.

Une telle électrovalve présente alors l'avantage de pouvoir être commandée en faisant simplement varier le courant circulant dans la bobine sans nécessiter de battements de la partie mobile ; il en résulte donc une forte diminution des à-coups de pression dans les freins. En outre, une telle électrovalve peut aisément être commandée par un calculateur assurant un découpage à fréquence variable d'un courant continu tel qu'on le trouve à bord d'un véhicule automobile, ou bien en découpage à fréquence fixe et à rapport cyclique variable, l'intensité du courant intégré par la bobine étant alors fonction du rapport cyclique.

Une telle électrovalve est par exemple décrite dans US-A-4 744 389. Toutefois, l'électrovalve décrite dans ce document ne peut pas être disposée dans un circuit hydraulique de freinage à antiblocage des roues du fait des pressions mises en oeuvre, notamment lors de l'excitation de l'électrovalve. En effet, l'électrovalve de ce document est conçue pour fonctionner en permanence dans un système de régulation d'une pression relativement faible. Cette limitation physique interdit donc l'utilisation d'une telle électrovalve avec des pressions élevées dans le moteur hydraulique. En outre, cette électrovalve ne permet pas de faire croître linéairement la pression lorsque le courant décroît linéairement dans la bobine et vice-versa.

Un but de la présente invention est de réaliser une électrovalve permettant de faire varier linéairement la pression en fonction du courant dans la bobine, pouvant être excitée avec une pression élevée dans le circuit hydraulique, et qui soit de conception et de montage simple.

La présente invention a donc pour objet un dispositif de régulation de pression pour un circuit hydraulique comprenant au moins un générateur de fluide sous pression, un moteur hydraulique et un réservoir de fluide sous basse pression, et incluant une électrovalve pilotée par un calculateur et comportant dans une carcasse une bobine électrique et un noyau magnétique coulissant commandant un tiroir coulissant dans un alésage prévu dans un corps, le tiroir déterminant deux chambres disposées de part et d'autre du tiroir dans l'alésage, le tiroir comprenant une enceinte hydraulique communiquant avec le moteur hydraulique et déterminant une force de réaction s'ajoutant à la force engendrée par la bobine, à l'encontre d'un moyen élastique précontraint.

Selon l'invention, l'enceinte est délimitée par un alésage pratiqué dans le tiroir, une partie d'extrémité d'un fourreau, une tige et une coupelle d'étanchéité entre la tige et l'alésage du tiroir.

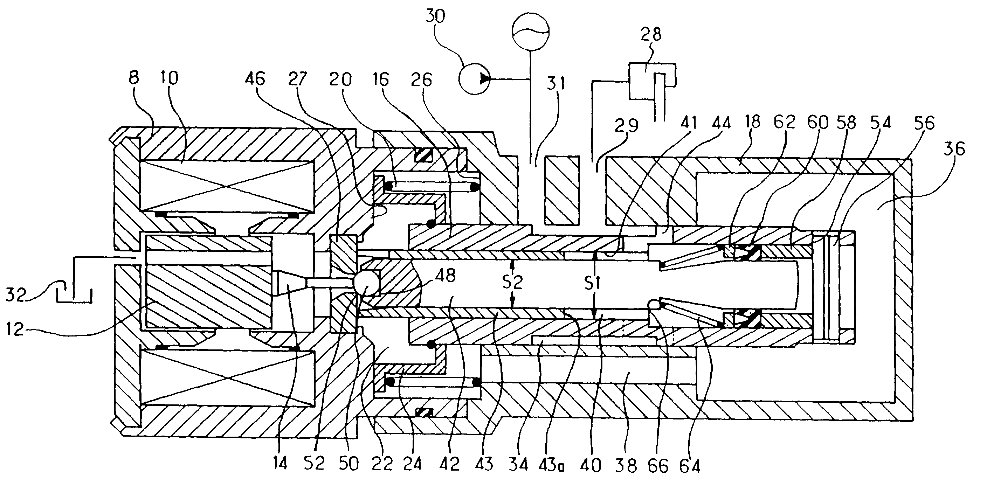

L'invention sera mieux comprise, et d'autres buts, avantages et caractéristiques de celle-ci apparaîtront plus clairement à la lecture de la description qui suit d'un mode préféré de réalisation donné à titre d'exemple non limitatif en référence aux dessins annexés sur lesquels :
- La Figure Unique représente schématiquement en coupe un mode de réalisation d'un dispositif conforme à la présente invention en position de repos.

On sait que la bobine des électrovalves dites proportionnelles, présente la caractéristique essentielle de pouvoir fournir un effort sensiblement constant pour un courant déterminé dans une plage de déplacement du noyau magnétique non négligeable, de l'ordre de 2 à 3 mm. Cette caractéristique est généralement obtenue grâce à une géométrie particulière des pièces polaires. Cette caractéristique est mise en oeuvre dans la présente invention pour assurer la fonction requise par modulation du courant circulant dans la bobine pour éviter un fonctionnement avec une partie mobile battant très rapidement.

Sur la Figure, on reconnaît une telle électrovalve comprenant dans une carcasse 8 une bobine d'excitation 10, un noyau magnétique coulissant 12 pourvu de son poussoir 14. La partie hydraulique de l'électrovalve est constituée d'un tiroir 16 coulissant dans un alésage d'un corps 18. Un ressort précontraint 20 est disposé dans une chambre 22 par exemple entre une coupelle 24 solidaire du tiroir 16 et une paroi 26 du corps 18 de façon à solliciter le tiroir 16 vers sa position de repos illustrée sur la Figure, en appui sur une paroi 27 de la carcasse 8 faisant face à la paroi 26.

Le tiroir 16 est usiné de manière à pouvoir ouvrir ou fermer une communication entre moteur hydraulique 28 raccordé à un conduit 29, une source de fluide sous pression 30 raccordée à un conduit 31 et un réservoir 32 conformément aux systèmes de régulation de pression hydraulique généralement utilisés. Pour ce faire, une gorge 34 est prévue à la périphérie du tiroir 16.

Les deux chambres 22 et 36 situées de part et d'autre du tiroir 16 dans l'alésage sont à la même pression grâce à un perçage 38 pratiqué dans le corps 18. Une enceinte 40 détermine sur le tiroir 16 une force de réaction. Cette enceinte 40 est formée dans un alésage 41 de section S1 du tiroir 16, entre cet alésage 41 et une tige 42 de section S2 inférieure à S1.

Entre l'alésage 41 et la tige 42 est disposé un fourreau 43, coulissant de façon sensiblement étanche dans l'alésage 41, et dans lequel coulisse de façon sensiblement étanche la tige 42. L'extrémité active 43a du fourreau 43 présente donc une surface annulaire égale à S1 - S2, et contribue à délimiter l'enceinte 40. Cette dernière communique avec la gorge 34 au moyen d'un perçage radial 44 dans le tiroir 16.

Le fourreau 43 est en appui sur la paroi 27 de la carcasse 8 ou sur une pièce 46 solidaire de la carcasse 8. La tige 42 est formée à une extrémité avec un logement 48 contenant de façon légèrement flottante une bille 50 coopérant avec un siège 52 formé sur la carcasse 8 ou sur la pièce 46 qui en est solidaire. Le montage "flottant" de la bille 50 dans le logement 48 a pour but d'obtenir une parfaite coopération de la bille 50 avec le siège 52, quels que soient les défauts de concentricité entre l'alésage 41, le fourreau 43 et la tige 42 dus aux tolérances de fabrication.

Le tiroir 16 est par ailleurs formé à son extrémité autre que celle qui porte la coupelle 24 avec des ouvertures radiales 54 destinées à recevoir une goupille 56. Cette goupille sert de butée pour un manchon 58 de maintien d'un joint ou d'une coupelle 60 assurant l'étanchéité entre l'alésage 41 du tiroir 16 et la tige 42. Une rondelle 62 est en appui sur la coupelle 60 et sert de butée pour un ressort 64 prenant appui par ailleurs sur un épaulement 66 formé sur la tige 42. La coupelle 60 assure ainsi l'étanchéité entre l'enceinte 40 et la chambre 36.

On voit donc que le ressort 64 sert de ressort de rappel pour le clapet à bille 50-52. On voit d'autre part que la coupelle 60 permet également de rattraper les défauts de concentricité entre l'alésage 41, le fourreau 43 et la tige 42. On voit enfin que, grâce à cette disposition avantageuse selon l'invention, tous les composants de l'électrovalve sont assemblés uniquement par des mouvements de direction axiale, à l'exception de la goupille 56 qui est mise en place en fin de montage dans une direction radiale, en n'ayant à traverser qu'une seule pièce, à savoir le tiroir 16. L'électrovalve selon l'invention est donc particulièrement simple à usiner puisqu'elle ne nécessite pas le respect de côtes rigoureuses, et simple à monter, ainsi qu'on vient de le voir. Elle est donc très peu onéreuse, et d'un fonctionnement simple, fiable et silencieux ainsi qu'on va maintenant le décrire.

En position de repos, telle que représentée, la source de fluide sous pression 30 est en communication avec le moteur 28 par l'intermédiaire de la gorge 34, et l'enceinte 40 est en communication avec le moteur 28. Les deux chambres d'extrémité 22 et 36 communiquent entre elles et sont isolées du réservoir 32 par le clapet 50 reposant sur son siège 52.

Lorsque l'électrovalve est excitée, par exemple en période d'antiblocage des roues dans le cadre de l'application préférée de l'invention, tout d'abord le courant circulant dans la bobine engendre une force s'opposant à celle du ressort 64 pour soulever la bille 50, portée par la tige 42, de son siège 52 et ouvrir la communication entre la chambre 22 et le réservoir 32. Le poussoir 14, en continuant son action sur la bille 50, va ensuite faire venir l'autre extrémité de la tige 42 au contact de la goupille 56. A ce moment, la force exercée par le poussoir 14 doit s'opposer à la force du ressort d'asservissement 20 pour faire se mouvoir le tiroir 16. La force est exercée par le poussoir 14 à l'encontre de celle du ressort 20 quelle que soit la pression régnant dans le circuit hydraulique. Ceci permet notamment à l'électrovalve de ne pas présenter une importante consommation électrique. L'ouverture du clapet 50, 52 et la mise en communication des chambres 22 et 36 avec le réservoir 32 a lieu avant que le courant dans la bobine 10 n'atteigne son intensité nominale. Puis l'intensité étant nominale, la tige 42 est en butée contre le tiroir 16 par l'intermédiaire de la goupille 56, et le mouvement du tiroir 16, à l'encontre du ressort 20, ferme le conduit 31 isolant ainsi la source de fluide sous pression 30 du moteur 28. Du fait de la position de la gorge 34, cette dernière communique avec la chambre 36 et, par suite, avec le réservoir 32. Il se produit donc une détente de la pression du fluide dans le moteur. On aura compris que le mouvement du tiroir 16 à l'encontre du ressort 20 est engendré par le courant dans la bobine 10 et est favorisé par la réaction hydraulique dans l'enceinte 40 sur la surface de réaction S = S1 - S2 qui engendre une force de réaction s'ajoutant à celle produite par la bobine et opposée à celle engendrée par le ressort d'asservissement 20. En diminuant l'intensité du courant dans la bobine, la pression ayant chuté dans le moteur 28, la force de réaction hydraulique due à l'enceinte 40 diminue et le tiroir se déplace dans l'autre sens, refermant la communication entre le moteur 28 et la chambre 36, et donc le réservoir 32, et rétablissant ensuite si nécessaire la communication entre la source 30 et le moteur 28 permettant une remontée de la pression dans le moteur 28.

Si l'on augmente l'intensité du courant dans la bobine, la pression va à nouveau chuter dans le moteur 28 puisque la communication entre le moteur et le réservoir 32 par l'intermédiaire de la gorge 34 et les chambres 22 et 36 sera re-ouverte.

On constate donc que d'une augmentation du courant dans la bobine résulte une diminution de la pression du fluide dans le moteur 28. On voit alors qu'en modulant, par exemple par découpage, le courant circulant dans la bobine 10, le tiroir 16 va prendre une position qui est fonction de la pression régnant dans l'enceinte 40, et l'on pourra, en pilotant judicieusement ce courant, appliquer au moteur 28 la pression de fluide désirée. En effet, la réaction hydraulique engendrée dans l'enceinte 40 va automatiquement ouvrir ou fermer les communications entre le moteur 28 et la source de fluide sous pression 30 et entre le moteur 28 et le réservoir 32 pour chaque valeur déterminée de l'intensité du courant circulant dans la bobine 10. Par un choix judicieux de la section de réaction S = S1 - S2, on pourra donc dimensionner la bobine 10 pour que la consommation électrique soit la plus faible possible, compte tenu des pressions en jeu.

De plus, de par la disposition du fourreau 43, du tiroir 16 et de la tige 42, le dispositif de l'invention est particulièrement simple à assembler et à démonter, et donc à entretenir.

## Revendications

1. Dispositif de régulation de pression pour un circuit hydraulique comprenant au moins un générateur (30) de fluide sous pression, un moteur hydraulique (28) et un réservoir de fluide (32) sous basse pression, et incluant une électrovalve pilotée par un calculateur et comportant dans une carcasse (8) une bobine électrique (10) et un noyau magnétique (12) coulissant commandant un tiroir (16) coulissant dans un alésage prévu dans un corps (18), le tiroir (16) déterminant deux chambres (22, 36) disposées de part et d'autre du tiroir (16) dans l'alésage, le tiroir comprenant une enceinte hydraulique (40) communiquant avec le moteur hydraulique (28) et déterminant une force de réaction s'ajoutant à la force engendrée par la bobine (10), à l'encontre d'un moyen élastique précontraint (20), caractérisé en ce que l'enceinte (40) est délimitée par un alésage (41) pratiqué dans le tiroir (16), une partie d'extrémité (43a) d'un fourreau (43), une tige (42) et une coupelle (60) d'étanchéité entre la tige (42) et l'alésage (41) du tiroir (16).

2. Dispositif selon la revendication 1, caractérisé en ce qu'un perçage radial (44) fait communiquer l'enceinte (40) avec une gorge (34) prévue à la périphérie du tiroir (16).

3. Dispositif selon la revendication 2, caractérisé en ce que le fourreau (43) est en appui sur une paroi (27) de la carcasse (8) ou sur une pièce (46) solidaire de la carcasse (8).

4. Dispositif selon la revendication 3, caractérisé en ce que le fourreau (43) coulisse de façon sensiblement étanche dans l'alésage (41) du tiroir (16) et reçoit à coulissement sensiblement étanche la tige (42).

5. Dispositif selon la revendication 4, caractérisé en ce que la force de réaction s'exerce sur la surface annulaire (S) de l'extrémité (43a) du fourreau (43).

6. Dispositif selon la revendication 5, caractérisé en ce qu'un ressort (64) de rappel d'un clapet à bille (50, 52) est disposé entre la coupelle (60) et un épaulement (66) de la tige (42).

7. Dispositif selon la revendication 6, caractérisé en ce que la coupelle (60) est maintenue par une goupille (56) traversant des ouvertures radiales (54) dans le tiroir (16).

8. Dispositif selon la revendication 7, caractérisé en ce que la bille (50) du clapet à bille (50,52) est contenue de façon légèrement flottante dans un logement (48) à une extrémité de la tige (42).

## Patentansprüche

1. Vorrichtung zur Druckregelung für einen Hydraulikkreis, mit wenigstens einem Druckfluid-Generator (30), einem Hydraulikmotor (28) und einem Niederdruckfluid-Vorratsbehälter (32), und enthaltend ein Elektroventil, das von einem Rechner gesteuert wird und in einem Gehäuse (8) eine elektrische Wicklung (10) und einen verschiebbaren Magnetkern (12) enthält, der einen Schieber (16) steuert, der in einer in einem Körper (18) vorgesehenen Bohrung gleitet, wobei der Schieber (16) zwei Kammern (22, 36) abgrenzt, die auf der einen und auf der anderen Seite des Schiebers (16) in der Bohrung angeordnet sind, wobei der Schieber einen Hydraulikraum (40) aufweist, der mit dem Hydraulikmotor (28) in Verbindung steht und eine Reaktionskraft erzeugt, die sich entgegen einem vorgespannten Federmittel (20) zu der von der Wicklung (10) erzeugten Kraft hinzuaddiert, dadurch gekennzeichnet, daß der Raum (40) durch eine in dem Schieber (16) ausgebildete Bohrung (41), einen Endabschnitt (43a) einer Hülse (43), eine Stange (42) und einen Ring (60) zur Abdichtung zwischen der Stange (42) und der Bohrung (41) des Schiebers (16) abgegrenzt ist.

2. Vorrichtung nach Anspruch 1, dadurch gekennzeichnet, daß eine radiale Öffnung (44) den Raum (40) mit einer am Umfang des Schiebers (16) vorgesehenen Nut (34) verbindet.

3. Vorrichtung nach Anspruch 2, dadurch gekennzeichnet, daß sich die Hülse (43) an einer Wand (27) des Gehäuses (8) oder an einem fest mit dem Gehäuse (8) verbundenen Teil (46) abstützt.

4. Vorrichtung nach Anspruch 3, dadurch gekennzeichnet, daß die Hülse (43) in der Bohrung (41) des Schiebers (16) in im wesentlichen dichter Weise gleitet und die Stange (42) im wesentlichen in dichter Weise verschiebbar aufnimmt.

5. Vorrichtung nach Anspruch 4, dadurch gekennzeichnet, daß die Reaktionskraft auf die ringförmige Fläche (S) des Endes (43a) der Hülse (43) einwirkt.

6. Vorrichtung nach Anspruch 5, dadurch gekennzeichnet, daß zwischen dem Ring (60) und einem Absatz (66) der Stange (42) eine Feder (64) zum Zurückstellen eines Kugelventils (50, 52) angeordnet ist.

7. Vorrichtung nach Anspruch 6, dadurch gekennzeichnet, daß der Ring (60) von einem Stift (56) gehalten ist, der radiale Öffnungen (54) in dem Schieber (16) durchquert.

8. Vorrichtung nach Anspruch 7, dadurch gekennzeichnet, daß die Kugel (50) des Kugelventils (50, 52) mit einem geringfügigen Spiel in einer Aufnahme (48) an einem Ende der Stange (42) aufgenommen ist.

## Claims

1. Pressure regulation device for a hydraulic system comprising at least one generator (30) of fluid under pressure, a hydraulic actuator (28) and a reservoir (32) of fluid under low pressure, and including an electro-valve controlled by a computer and comprising in a casing (8) an electrical coil (10) and a sliding magnetic core (12) controlling a slide valve (16) sliding in a bore provided in a body (18), the slide valve (16) determining two chambers (22, 36) arranged on either side of the slide valve (16) in the bore, the slide valve comprising a hydraulic chamber (40) communicating with the hydraulic actuator (28) and determining a reaction force adding itself to the force produced by the coil (10), against a prestressed resilient means (20), characterized in that the chamber (40) is delimited by a bore (41) made in the slide valve (16), an end part (43a) of a sleeve (43), a rod (42) and a cup (60) for leaktightness between the rod (42) and the bore (41) of the slide valve (16).

2. Device according to Claim 1, characterized in that a radial drilling (44) causes the chamber (40) to communicate with a groove (34) provided at the periphery of the slide valve (16).

3. Device according to Claim 2, characterized in that the sleeve (43) bears against a wall (27) of the casing (8) or against a part (46) integral with the casing (8).

4. Device according to Claim 3, characterized in that the sleeve (43) slides in a substantially leaktight manner in the bore (41) of the slide valve (16) and slidably receives in substantially leaktight manner the rod (42).

5. Device according to Claim 4, characterized in that the reaction force is exerted on the annular surface (S) of the end (43a) of the sleeve (43).

6. Device according to Claim 5, characterized in that a spring (64) for return of a ball valve (50, 52) is arranged between the cup (60) and a step (66) of the rod (42).

7. Device according to Claim 6, characterized in that the cup (60) is retained by a pin (56) passing through radial apertures (54) in the slide valve (16).

8. Device according to Claim 7, characterized in that the ball (50) of the ball valve (50, 52) is contained in a slightly floating manner in a recess (48) at one end of the rod (42).
